# EUROPÄISCHE PATENTANMELDUNG

(11) **EP 4 822 202 A1**
(43) Veröffentlichungstag der Anmeldung: **14.10.2026**
(21) Anmeldenummer: 26160284.1
(22) Anmeldetag: 24.02.2026
(51) Int. Cl.: F16D 51/12, F16D 51/14, F16D 65/22, F16D 65/62

(54) **TROMMELBREMSE**

(30) Priorität: 10.04.2025 DE 102025114201
(71) Anmelder: KB Intellectual Property GmbH & Co. KG, 82049 Pullach (DE)
(72) Erfinder: Weber, Ralf, 80997 München (DE); Iraschko, Johann, 85301 Schweitenkirchen (DE); Schröpf, Frederic, 94469 Deggendorf (DE); Fischer, Rudolf, 85435 Erding (DE)

(57) **Zusammenfassung**

Eine Trommelbremse (1), insbesondere für ein Nutzfahrzeug, umfasst eine um eine Drehachse (2a) drehbar gelagerte Bremstrommel (2), mehrere in einem Aufnahmeraum der Bremstrommel (2) gelagerte Bremsbacken (5) mit einem jeweiligen Reibbelagträger (51) und einem an diesem angeordneten Reibbelag (52), einen Nachsteller (8) zur Erfassung und zum Ausgleich eines vergrößerten Lüftspiels, und einen Lüftspielverstellmechanismus (9), der eine mit dem Nachsteller (8) gekoppelte temperaturabhängige Korrektureinrichtung (100, 200) zur Anpassung des Lüftspiels entsprechend einer Temperatur der Bremstrommel (2) aufweist.

## Beschreibung

Die vorliegende Erfindung betrifft eine Trommelbremse gemäß dem Oberbegriff des Anspruchs 1.

Gattungsgemäße Trommelbremsen, beispielsweise bekannt aus der WO 2022/2633324 A1, werden insbesondere in Nutzfahrzeugen eingesetzt.

Derartige gattungsgemäße Trommelbremsen weisen eine Bremstrommel auf, gegen deren Innenseite Bremsbeläge radial angedrückt werden.

Die aus der WO 2022/2633324 A1 bekannte Trommelbremse weist darüber hinaus auch eine integrierte Aktuatorik sowie einen mechanisch wirkenden, in die Bremse integrierten Verschleißnachsteller auf.

Der Nachsteller dient dabei der Einstellung eines konstruktiven Lüftspiels, das die Breite eines Spaltes zwischen den Kontaktflächen der Bremsbeläge und der Bremstrommel definiert.

Der Nachsteller dient dabei dazu, ein sich aufgrund des Verschleißes der Reibpaarung von Bremsbelägen und Trommelbremse über deren Betriebszeit vergrößerndes Lüftspiel auszugleichen.

Herkömmliche Nachsteller sind dabei so aufgebaut, dass diese nur zu große Lüftspiele korrigieren können, nicht jedoch zu kleine Lüftspiele.

Problematisch ist, dass bei steigender Temperatur der Bremstrommel diese sich aufgrund der Temperaturerhöhung aufweitet (Schirmung der Bremstrommel). Dies würde dazu führen, dass der Nachsteller beginnt, die Bremse im noch heißen Zustand im aufgeweiteten Zustand der Bremstrommel nachzustellen und dadurch das reale Lüftspiel auf das konstruktive Lüftspiel zurückzustellen.

Dadurch besteht die Gefahr, dass bei Beendigung des Bremszyklus die Bremstrommel wieder abkühlt und auf die Bremsbeläge aufschrumpft und somit das Rad des Fahrzeugs blockiert.

Nach derzeitigem Stand der Technik wird dieses Problem dadurch gelöst, dass der Nachsteller sehr langsam nachstellt und dadurch verhindert werden soll, dass bei sogenannten Heißabfahrten, sprich bei sehr hochfrequenter Taktung der Bremse, das Lüftspiel komplett zugestellt wird.

Aufgabe der Erfindung ist es, eine verbesserte Trommelbremse mit einem verbesserten Nachsteller unter Einbeziehung der Temperatur der Bremstrommel zu schaffen.

Diese Aufgabe wird durch eine Trommelbremse mit den Merkmalen des Anspruchs 1 gelöst.

Die erfindungsgemäße Trommelbremse weist eine um eine Drehachse drehbar gelagerte Bremstrommel auf sowie mehrere in einem Aufnahmeraum der Bremstrommel gelagerte Bremsbacken mit einem jeweiligen Reibbelagträger und einem an diesem angeordneten Reibbelag.

Die Trommelbremse weist weiter einen Nachsteller zur Erfassung und zum Ausgleich eines vergrößerten Lüftspiels auf.

Die Trommelbremse weist darüber hinaus einen Lüftspielverstellmechanismus auf, der eine mit dem Nachsteller gekoppelte temperaturabhängige Korrektureinrichtung zur Anpassung des Lüftspiels entsprechend einer Temperatur der Bremstrommel aufweist.

Mit einer solchen Korrektureinrichtung ist es ermöglicht, die Nachstellung der Trommelbremse nur im abgekühlten Zustand der Bremstrommel anzustoßen, bei der die Bremstrommel keiner Schirmung unterliegt.

Vorteilhafte Ausführungsvarianten der Erfindung sind Gegenstand der Unteransprüche.

Gemäß einer vorteilhaften Ausführungsvariante korrigiert die Korrektureinrichtung das Lüftspiel aus einer Normalstellung des Lüftspielverstellmechanismus bei normaler Temperatur der Bremstrommel derart bei steigender Temperatur der Bremstrommel, dass das Lüftspiel in einer Temperaturstellung des Lüftspielverstellmechanismus vergrößert ist und bei Rückgang der Temperatur der Bremstrommel wieder den Wert in der Normalstellung des Lüftspielverstellmechanismus einnimmt.

Dies ermöglicht eine vorteilhafte Anpassung des Lüftspiels der Trommelbremse an die Temperatur der Bremstrommel.

Gemäß einer ersten bevorzugten Ausführungsvariante weist die Korrektureinrichtung einen sich mit zunehmender Temperatur ausdehnenden Stift auf, mit dessen Längsausdehnung mechanisch ein Arretierstück in einer Blockierstellung haltbar ist, in der das Arretierstück in ein Getriebe des Nachstellers zur Verhinderung einer Nachstellbewegung des Nachstellers eingreift.

Dadurch ist eine stufenlose Anpassung des realen Lüftspiels proportional zur Temperatur der Bremstrommel ermöglicht.

Der Stift ist gemäß einer vorteilhaften Weiterbildung mit einer Rückstellfeder gekoppelt.

Die Korrektureinrichtung weist gemäß einer Ausführungsvariante einen Schlitten auf, der sich bei Betätigung der Bremsbacken synchron zum getätigten Hub bewegt. Zum Abgriff des Hubs der Bremsbacken stützt sich ein am Schlitten befestigter Stützkörper an einem sich bei Betätigung der Bremsbacken parallel zur Drehachse der Bremstrommel sich bewegenden Keilring eines Keilmechanismus der Trommelbremse ab.

Das Arretierstück ist am Schlitten parallel zur Drehachse der Bremstrommel gleitend gelagert angebracht und durch die temperaturabhängige Ausdehnung des Stifts relativ zum Schlitten verfahrbar.

Der Stift ist an einem ersten Ende ortsfest zu einem Bremsträger der Trommelbremse gehalten und an seinem freien Ende mit einem durch die Längsausdehnung des Stiftes verschiebbaren ersten Kolben gekoppelt.

Nach einer weiteren bevorzugten Weiterbildung ist in einer starr mit dem Schlitten verbundenen Kolbenführung ein über eine flexible Schlauchleitung mit dem ersten Kolben verbundener zweiter Kolben geführt, wobei der erste Kolben einen größeren Durchmesser als der zweite Kolben hat.

Dies ermöglicht eine Übersetzung der Ausdehnung des Stifts in eine vergrößerte Verschiebebewegung des Arretierstücks.

Zur Befestigung der Kolbenführung am Schlitten weist das Gehäuse der Kolbenführung des zweiten Kolbens eine Lasche mit einem Gewinde auf, dass zu einer Gewindebohrung im Schlitten korrespondiert.

Gemäß einer bevorzugten Ausführungsvariante ist das Verhältnis eines Verfahrwegs des zweiten Kolbens zur Längenänderung des Stiftkontakts direkt proportional zum Verhältnis der Durchmesser des zweiten Kolbens zum ersten Kolben zum Quadrat und lediglich mit einem Faktor f mit Wert nahe 1 beeinflussbar.

Der erste Kolben und der zweite Kolben bestehen gemäß einer weiteren bevorzugten Ausführungsvariante jeweils aus einem Kolbenpaar, deren Kontaktflächen einen Winkel zu deren Symmetrieachsen aufweisen, für die, falls die Kolben eines Kolbenpaares senkrecht zueinander stehen, gilt: $\frac{Δ s}{Δ l} = \frac{tan {W}_{\left(18\right)}}{tan {W}_{\left(10\right)}} \times f$

Gemäß einer weiteren vorteilhaften Ausführungsvariante ist zur Übertragung der Bewegung des ersten Kolbens zum zweiten Kolben die Schlauchleitung mit einem flüssigen Medium oder spielfrei in Reihe mit Kugeln, oder mit einem inkompressiblen Medium gefüllt.

Der Schlitten weist gemäß einer weiteren bevorzugten Ausführungsvariante eine mechanisch lösbare Verbindung für ein Montagewerkzeug auf, mit dem der Schlitten parallel zur Hubrichtung bewegbar ist.

Gemäß einer weiteren Ausführungsvariante leitet ein sich mit der Verschleißnachstellung proportional verschiebbarer Stiftkontakt die Temperatur vom Reibbelagträger ab und weist eine einen Verschleiß und/oder Hub anzeigende Kontur auf.

Dies ermöglicht in einfacher Weise eine Verschleißsensierung.

Gemäß einer alternativen Ausführungsvariante der Korrektureinrichtung weist diese einen sich mit zunehmender Temperatur ausdehnenden Stift auf, durch dessen Längsausdehnung eine Anschlaghülse von einer ein reguläres Lüftspiel zulassenden Axialbewegung des Nachstellers in eine ein zusätzliches Lüftspiel zulassende Axialbewegung des Nachstellers verschiebbar ist.

Gemäß einer vorteilhaften Weiterbildung wirkt der Stift auf einen Keil, der die thermische Ausdehnung des Stifts über einen Übersetzungshebel in eine Bewegung einer Schaltgabel übersetzt, die derart mit der Anschlaghülse zusammenwirkt, dass die Schaltgabel bis zu einem vorbestimmten Verschiebeweg die Bewegung der Anschlaghülse nach Erreichen des regulären Lüftspiels sperrt und nach Überschreiten des vorbestimmten Verschiebewegs die Bewegung der Anschlaghülse erst nach Erreichen des zusätzlichen Lüftspiels sperrt.

Gemäß einer vorteilhaften Weiterbildung transformiert der Übersetzungshebel die lineare Bewegung des Keils derart auf die Schaltgabel, dass diese sich radial zur Rotationsachse des Nachstellers bewegt.

Nachfolgend werden bevorzugte Ausführungsbeispiele anhand der beiliegenden Zeichnungen näher erläutert.

Es zeigen:
- Fig. 1: eine schematische perspektivische Ansicht eines ersten Ausführungsbeispiels einer erfindungsgemäßen Trommelbremse mit einem Lüftspielverstellmechanismus;
- Fig. 2: eine schematische Schnittansicht in der Ebene der Lüftspielsicherung der Trommelbremse gemäß Figur 1;
- Fig. 3: eine weitere Schnittansicht in der Ebene der Bremsbeläge der Trommelbremse gemäß Figur 1;
- Fig. 4: eine schematische perspektivische Explosionsdarstellung der Lüftspielsicherung mit hydraulischer Kraftübertragung und Teleskop-Stiftkontakt;
- Fig. 5: eine schematische Schnittansicht der Lüftspielsicherung mit hydraulischer Kraftübertragung, Teleskop-Stiftkontakt und Detailansicht der hydraulischen Schlauchleitung,
- Fig. 6: eine schematische Schnittansicht einer alternativen Ausführungsvariante der Lüftspielsicherung mit mechanischer Kraftübertragung und Taster-Stiftkontakt sowie einer Detailansicht der mechanischen Schlauchleitung,
- Fig. 7: eine schematische Schnittansicht durch die Ebene der Rotationsachsen des Teleskop-Stiftkontakts,
- Fig. 8: eine schematische Schnittansicht durch die Ebene der Rotationsachsen des zweiten Kolbens,
- Fig. 9: eine schematische Schnittansicht durch die Ebene der Rotationsachsen des reactio-Kolben (18) in der Arbeitsstellung nach Überwindung der Lüftspielsperre bei Hubposition des konstruktiven Lüftspiels und Bremsenkomponenten bei Raumtemperatur,
- Fig. 10: eine schematische Schnittansicht durch die Ebene der Rotationsachsen des zweiten Kolbens in der Arbeitsstellung nach Überwindung der Lüftspielsperre bei Hubposition des konstruktiven Lüftspiels und Bremsenkomponenten bei maximaler Betriebstemperatur,
- Fig. 11: eine schematische Schnittansicht durch die Ebene der Rotationsachsen des zweiten Kolbens mit Service-Werkzeug,
- Fig. 12: eine schematische Schnittansicht einer radial betätigten Trommelbremse in der Ebene der Lüftspielsicherung mit alternativ ausgebildeter Lüftspielsicherung,
- Fig. 13: eine schematische Schnittansicht der Trommelbremse gemäß Figur 12 mit Wartungswerkzeug zum Zurückstellen des Lüftspiels beim Bremsbelagwechsel,
- Fig. 14: eine schematische Frontalansicht der Lüftspielsicherung gemäß Figur 12 ohne Darstellung des Kolbendeckels,
- Fig. 15: eine schematische Schnittansicht durch den Stift und eine erste Weg-Übersetzungsstufe durch einen Keil,
- Fig. 16: eine schematische Schnittansicht auf eine zweite Weg-Übersetzungsstufe durch einen Übersetzungshebel,
- Fig. 17: eine schematische perspektivische Ansicht der Lüftspielanpassung und des Nachstellers im Betriebszustand,
- Fig. 18: eine schematische perspektivische Ansicht der Lüftspielanpassung und des Nachstellers im Wartungszustand mit Rückstellwerkzeug,
- Fig. 19: eine isometrische Einzeldarstellung der Anschlaghülse,
- Fig. 20: eine isometrische Einzeldarstellung der Schaltgabel, und
- Fig. 21: eine isometrische Einzeldarstellung des Rückstellwerkzeugs.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Trommelbremse, Bremstrommel, Bremsbacke und zugehörige Funktionselemente, Funktionseinheiten und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

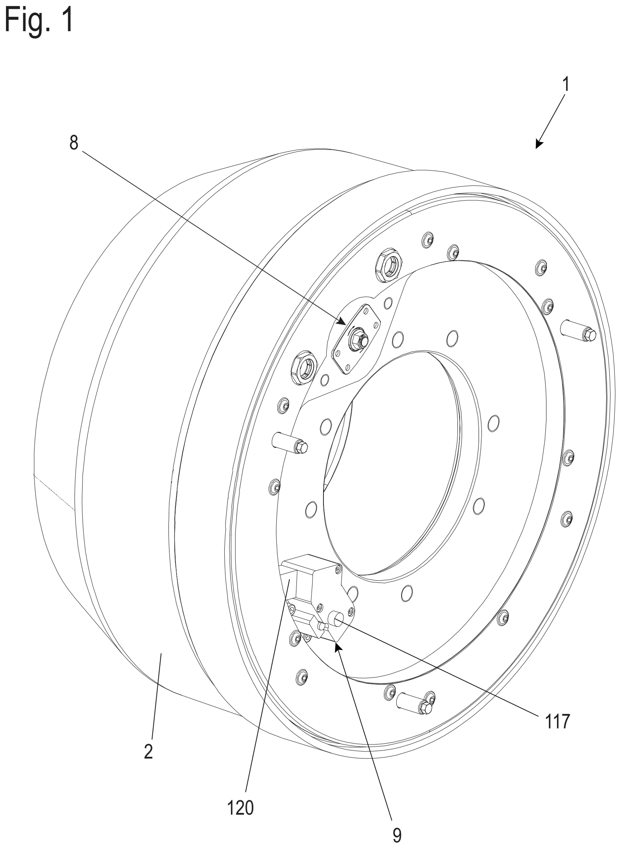

In **Figur 1** ist schematische perspektivische Ansicht einer ersten Ausführungsvariante einer erfindungsgemäßen Trommelbremse 1 mit einem Lüftspielverstellmechanismus 9 dargestellt.

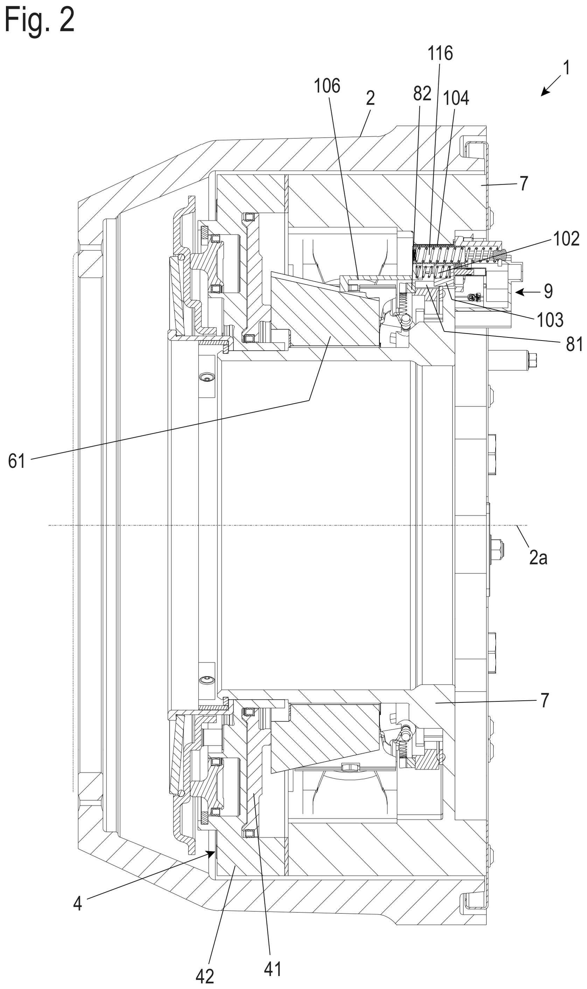

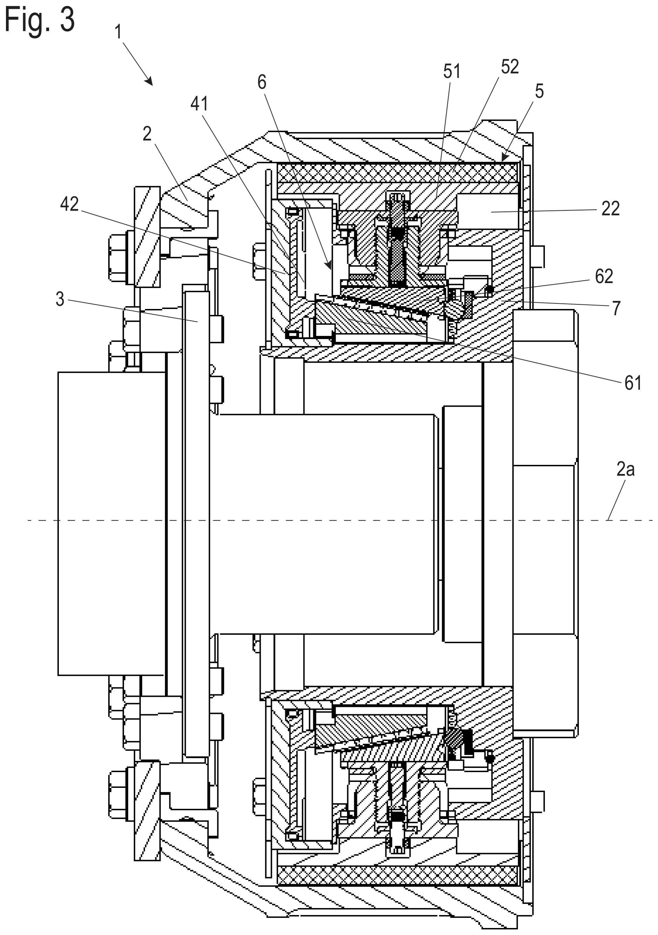

Die Trommelbremse 1 weist, wie weiter in den **Figuren 2** **und** **3** gezeigt ist, eine um eine Drehachse 2a drehbar gelagerte Bremstrommel 2 auf sowie mehrere in einem Aufnahmeraum 22 der Bremstrommel 2 gelagerte Bremsbacken 5 mit einem jeweiligen Reibbelagträger 51 und einem an diesem angeordneten Reibbelag 52.

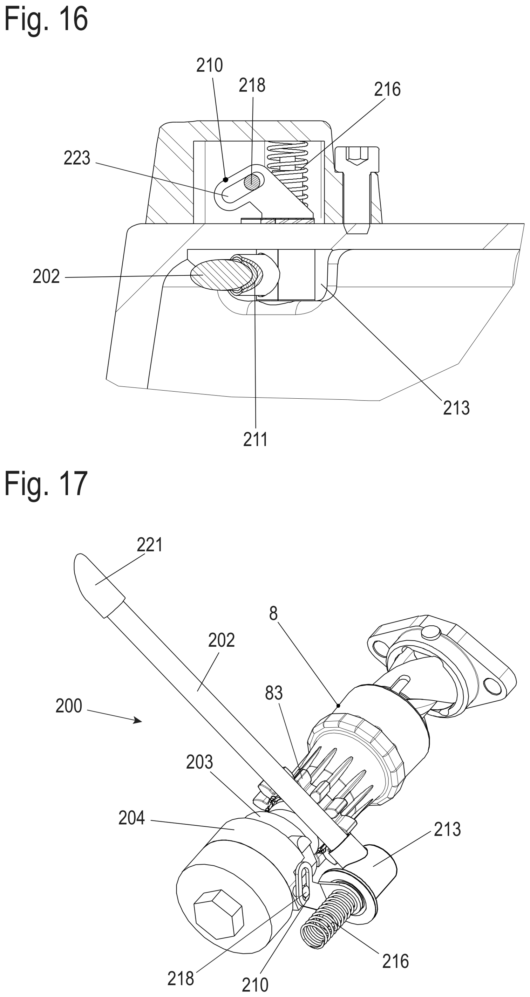

Ein Nachsteller 8, gezeigt in Figur 17, dient der Erfassung und dem Ausgleich eines vergrößerten Lüftspiels zwischen den Reibbelägen 52 und der Innenseite der Bremstrommel 2.

Die Trommelbremse 1 weist weiter einen Lüftspielverstellmechanismus 9, der eine mit dem Nachsteller 8 gekoppelte temperaturabhängige Korrektureinrichtung 100 aufweist, die der Anpassung des Lüftspiels entsprechend einer Temperatur und der damit einhergehenden Aufweitung der Bremstrommel 2 dient.

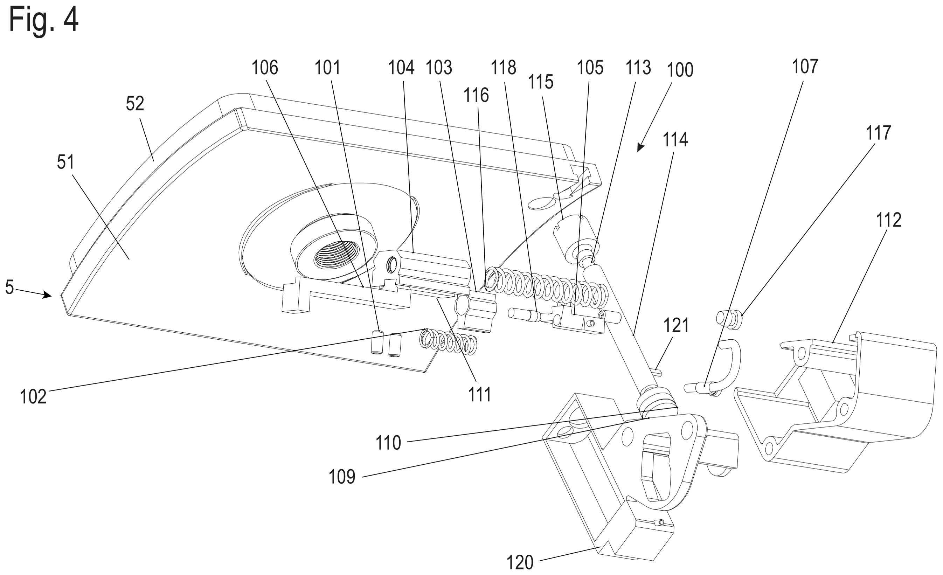

Bei der in den **Figuren 1 bis 11** gezeigten ersten Ausführungsvariante eines solchen Lüftspielverstellmechanismus 9 weist die Korrektureinrichtung 100 einen sich mit zunehmender Temperatur ausdehnenden Stift 114 auf, dargestellt in der Explosionsdarstellung in Figur 4.

Die durch die erhöhte Temperatur der Bremstrommel 2 bewirkte Längsausdehnung dieses Stiftes 114 wird weitergeleitet an ein Arretierstück 103. Das Arretierstück 103 wird dadurch in einer Blockierstellung gehalten, bei der das Arretierstück 103 in ein von einem Zahnrad 83 des Nachstellers 8, gezeigt in Figur 17, angetriebenen Getriebe 81 des Nachstellers 8 eingreift und so verhindert, dass der Nachsteller 8 über das Getriebe das Lüftspiel nachstellt, wie es beispielhaft in Figur 2 zu erkennen ist.

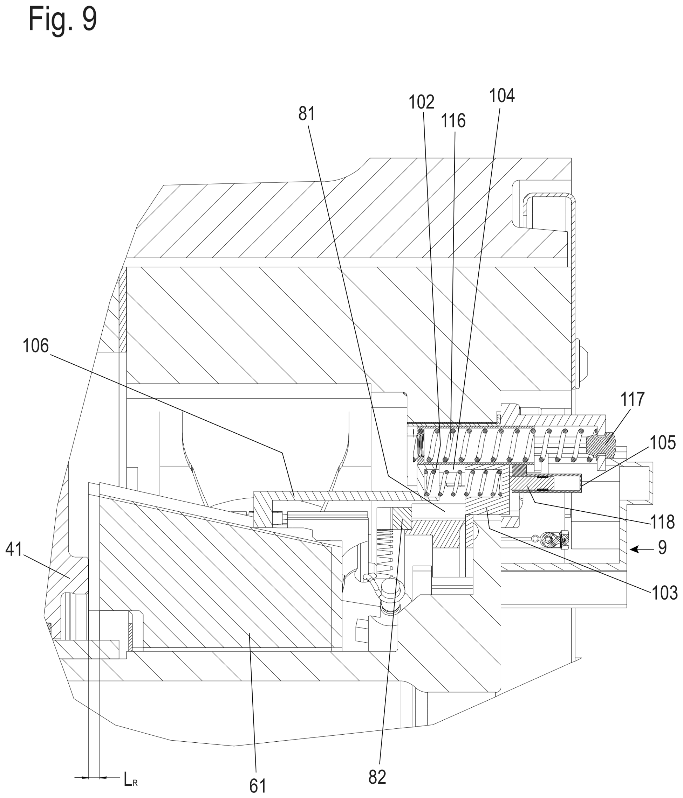

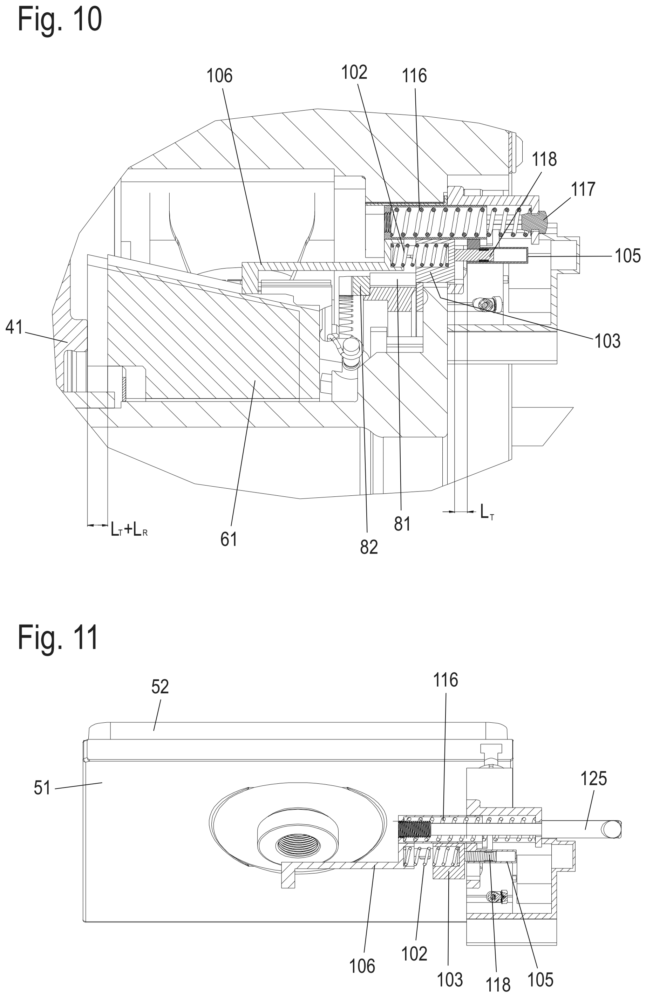

Durch die Korrektureinrichtung 100 wird so das Lüftspiel L_{R} aus einer Normalstellung des Lüftspielverstellmechanismus 9 bei normaler, einer Außenlufttemperatur etwa gleichen Temperatur der Bremstrommel 2 (beispielhaft dargestellt in Figur 9) derart bei steigender Temperatur der Bremstrommel 2 korrigiert, dass das Lüftspiel in einer Temperaturstellung des Lüftspielverstellmechanismus 9 um ein thermisches Lüftspiel L_{T} auf ein Lüftspiel L_{T} + L_{R} vergrößert ist (beispielhaft dargestellt in Figur 10) und bei Rückgang der Temperatur der Bremstrommel 2 wieder den Wert L_{R} bei Normalstellung des Lüftspielverstellmechanismus 9 einnimmt.

Wie weiter in den Figuren 4 bis 8 dargestellt ist, weist die Korrektureinrichtung 100 einen Schlitten 104 auf, der sich bei Betätigung der Bremsbacken 5 synchron zum getätigten Hub der Bremsbacken 5 bewegt.

Zum Abgriff des Hubs der Bremsbacken 5 ist ein am Schlitten 104 befestigter Stützkörper 106 vorgesehen, der sich an einem parallel zur Drehachse 2a der Bremstrommel 2 sich bewegendem Keilring 61 eines Keilmechanismus 6 der Trommelbremse 1 abstützt, wie es in Figur 2 erkennbar ist.

Der Schlitten 104 weist eine Führungsnut 111 auf, in der das Arretierstück 103 relativ zum Schlitten 104 in Hubrichtung des Keilrings 61 verschiebbar ist.

Die temperaturabhängige Verschiebung des Arretierstücks 103 wird dabei über den sich mit zunehmender Temperatur ausdehnenden Stift 114 gesteuert.

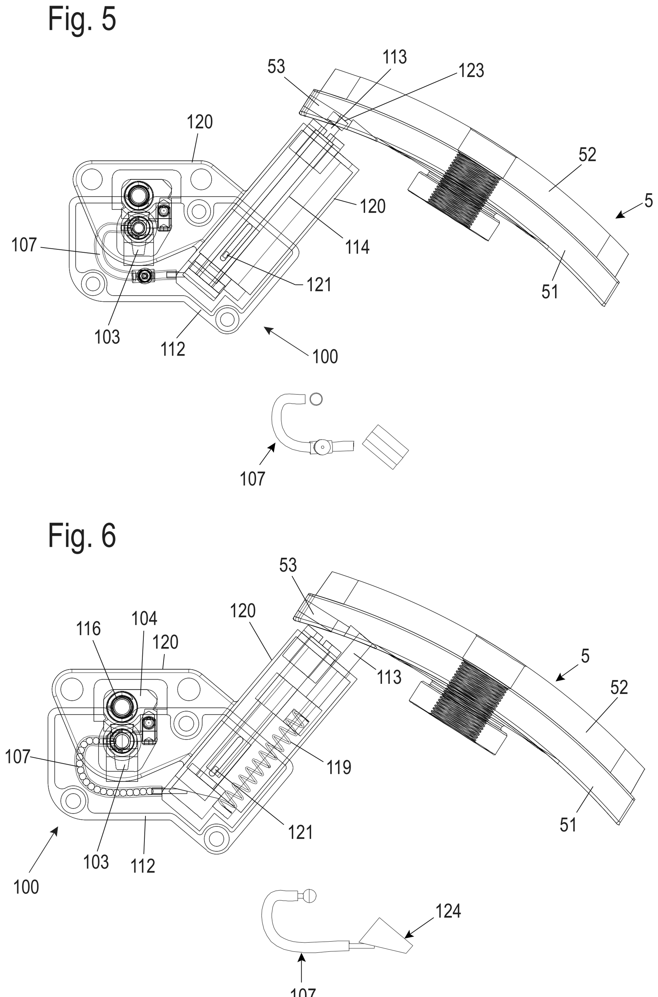

Der Stift 114 ist dabei, wie in den Figuren 5 und 6 dargestellt ist, an einem ersten Ende ortsfest zu einem Bremsträger 7 der Trommelbremse 1 gehalten und an seinem freien Ende mit einem durch die Längsausdehnung des Stiftes 114 verschiebbaren ersten Kolben 110 gekoppelt.

Die ortsfeste Halterung des Stiftes 114 erfolgt im gezeigten Ausführungsbeispiel an einem Stiftgehäuse 120, welches am Bremsträger 7 gehalten ist. Zum Abgriff der Temperatur der Bremstrommel 2 dient ein Teleskopstift 113, der, wie in den Figuren 5 und 6 dargestellt ist, in einer Aufnahmenut 53 in wenigstens einem der Reibbelagträger 51 der Bremsbacken 5 gehalten ist.

Der Teleskopstift 113 dient dabei der Wärmeübertragung von der Bremsbacke 5 auf den Stift 114, da die Bremsbacke 5 sich sowohl durch die Verschleißnachstellung als auch den Bremshub relativ zur Korrektureinrichtung 100 bewegt.

Bei der in Figur 6 gezeigten Ausführungsvariante wird der Teleskopstift 113 durch eine Feder 119 vorgespannt, so dass der Teleskopstift 113 stets an die Rückseite des Reibbelagträgers 51 angedrückt wird.

Werden bei einem Bremsvorgang die Bremsenkomponenten durch die durch die Reibung zwischen der Bremstrommel 2 und dem Reibbelag 52 der Bremsbacke 5 auftretende Betriebstemperatur wärmer, dehnt sich der Stift 114 in Richtung des ersten Kolbens 110 aus.

Da die Längenänderung eines solchen Stiftes 114 beispielsweise im Falle eines Kupferstiftes nur um 0,0000164 1/k (Wärmedehnungskoeffizient von Kupfer) ausdehnt, bedeutet dies beispielsweise für einen 60 mm langen Stift bei einer Temperaturänderung von 300 K eine Längenänderung von etwa 0,3 mm. Diese Längenänderung wird bevorzugt über eine flexible Schlauchleitung 107 in einen zweiter Kolben 118 überführt. Der erste Kolben 110 weist dabei einen größeren Durchmesser auf als der zweite Kolben 118.

Das Gehäuse der Kolbenführung 105 des zweiten Kolbens 118 weist bevorzugt eine Lasche mit einem Gewinde auf, dass zu einer Gewindebohrung im Schlitten 104 korrespondiert und somit die Kolbenführung 105 des zweiten Kolbens 118 fest mit dem Schlitten 104 verbindet.

Die Bewegung des zweiten Kolbens 118 muss dabei dergestalt sein, dass bei einer radialen Aufweitung der Bremstrommel 2 bei maximaler Betriebstemperatur von beispielsweise 1,3 mm und einer Kraft-/Weg-Übersetzung i= 5 der Trommelbremse 1 dementsprechend der zweite Kolben 118 eine Distanz von 6,5 mm überwinden, um sicherzustellen, dass der Nachsteller 8 innerhalb der zusätzlichen 1,3 mm nicht nachstellt.

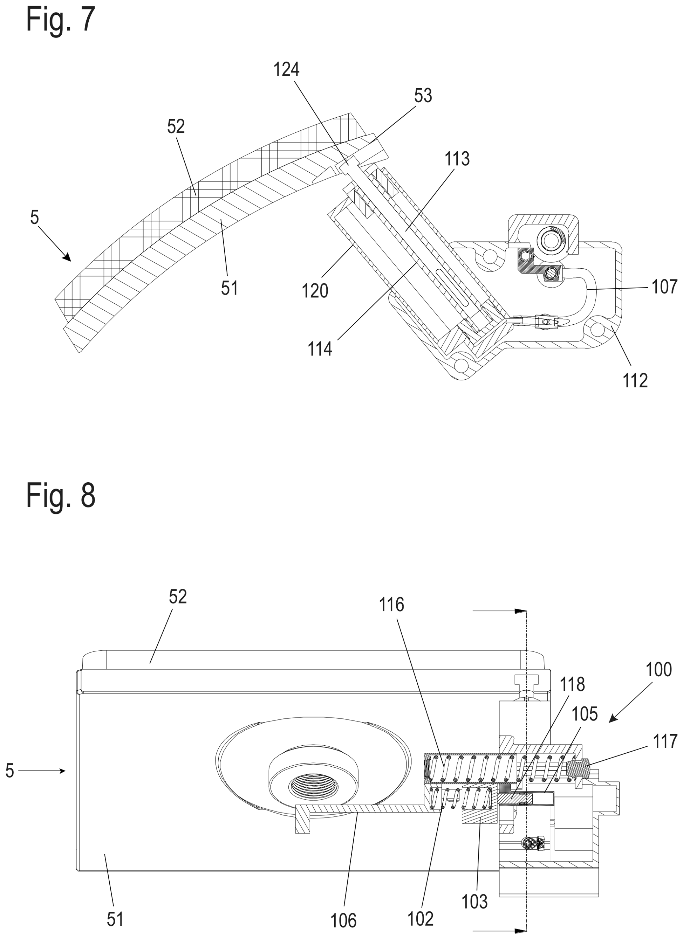

Die Figuren 9 und 10 zeigen beispielhaft zwei unterschiedliche Arbeitspositionen der Lüftspielsicherung 9. Der Keilring 61, der über den Betriebsbremsdruck in entsprechende Keilplatten 62 der Bremsbacken 5 geschoben wird und diese somit bei Betätigung der Trommelbremse 1 radial nach außen drückt, ist in Figur 8 einmal in seiner Grundposition bei nicht betätigter Bremse und einmal leicht nach rechts versetzt bei einem Betätigungshub von 3 mm in Figur 9 und entsprechend in Figur 10 bei einem Betätigungshub von 6,222 mm dargestellt.

Wie in den Figuren 9 und 10 zu erkennen ist, steht das Arretierstück 103 in beiden Fällen in der Grenzlage zur Freigabe der Nachstellbewegung. Damit liegt für den Nachsteller 8 in Figur 9 sowie Figur 10 die gleiche Arbeitsposition vor, wonach dieser erst dann nachstellen kann, wenn sowohl das konstruktive Lüftspiel als auch das durch die Temperatur der Bremstrommel 2 vergrößerte Lüftspiel L_{T} überwunden wird.

Wird die Trommelbremse 1 entlüftet, schiebt eine Druckfeder 116, gezeigt in den Figuren 9 und 10, den Schlitten 104 und dessen Anbauteile zurück in die Ausgangsposition.

Da der Schlitten 104 den Gesamthub der Trommelbremse 1 verfahren muss, wohingegen der Stift 114 ortsfest montiert ist, erfolgt die Kraftübertragung zwischen dem ersten Kolben 10 und dem zweiten Kolben 18 wie oben beschrieben flexibel über die Schlauchleitung 107.

Die Schlauchleitung 107 ist dabei bei der in Figur 5 gezeigten Ausführungsvariante hydraulisch und bei der in Figur 6 gezeigten Variante über einen Kugeltrieb mit Keilübersetzung ausgebildet.

Für die hydraulische Kraft-/Wegübersetzung gilt dabei, dass die benötigte Wegänderung Δs des Arretierstücks 103 gleich dem Verhältnis der Quadrate des Querschnitts des ersten Kolbens 110 zum Querschnitt des zweiten Kolbens 118 multipliziert mit der maximal möglichen Längenänderung Δ_{L} des Stifts 114 ist.

Entsprechend sind die Keilwinkel am ersten Kolben 110 und am zweiten Kolben 118 so zu wählen, dass der Proportionalitätsfaktor von Δs zu Δ_{L} erreicht wird.

Um in empirischen Untersuchungen aufgetretene Schmutzeffekte durch eine über- oder unterproportionale Bewegung des zweiten Kolbens 118 auszugleichen, kann je nach empirischen Ergebnissen die direkte Proportionalität mit einem Steigungsfaktor größer oder kleiner 1 versehen werden.

Im Servicefall kann, wie in Figur 11 gezeigt ist, ein Servicewerkzeug 125, beispielsweise in Gestalt eines Schlüssels, in den Schlitten 104 eingeschraubt werden, der sich auf dem Gehäuse der Kolbenführung 109 abstützt und über einen in den Schlitten 104 eingreifendes Gewinde den Schlitten 104 zurückzieht. Dadurch wird die Blockade des Nachstellmechanismus aufgehoben, so dass ein Wechsel der Bremsbacken ermöglicht ist.

Wie weiter beispielsweise in den Figuren 4, 5 und 6 gezeigt ist, kann der Teleskopstift 113 mit einer detektierbaren Kontur 121 versehen sein, mithilfe derer bei nichtbetätigter Bremse der Verschleiß und bei Betätigung der Hub detektiert werden kann.

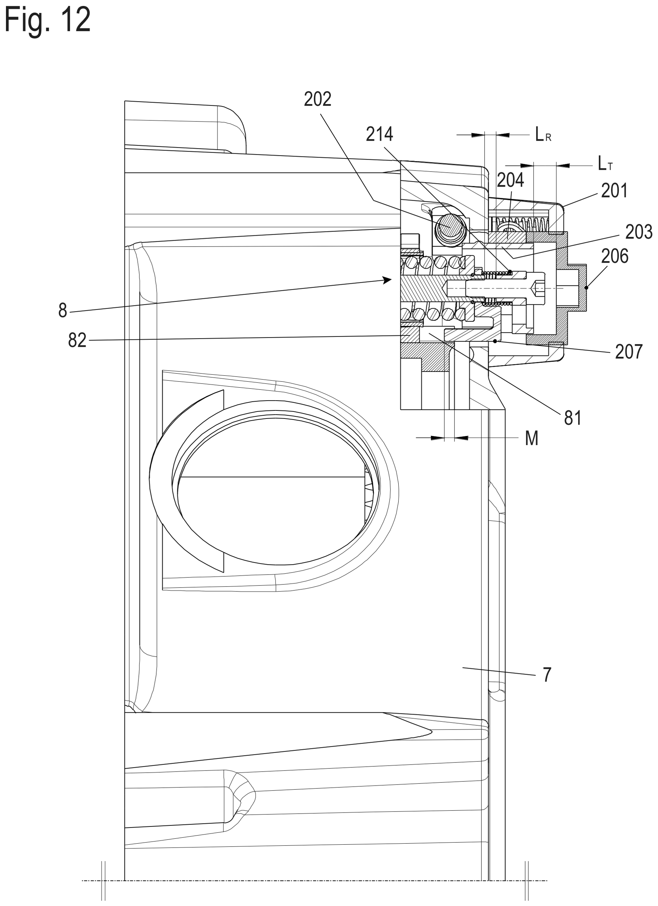

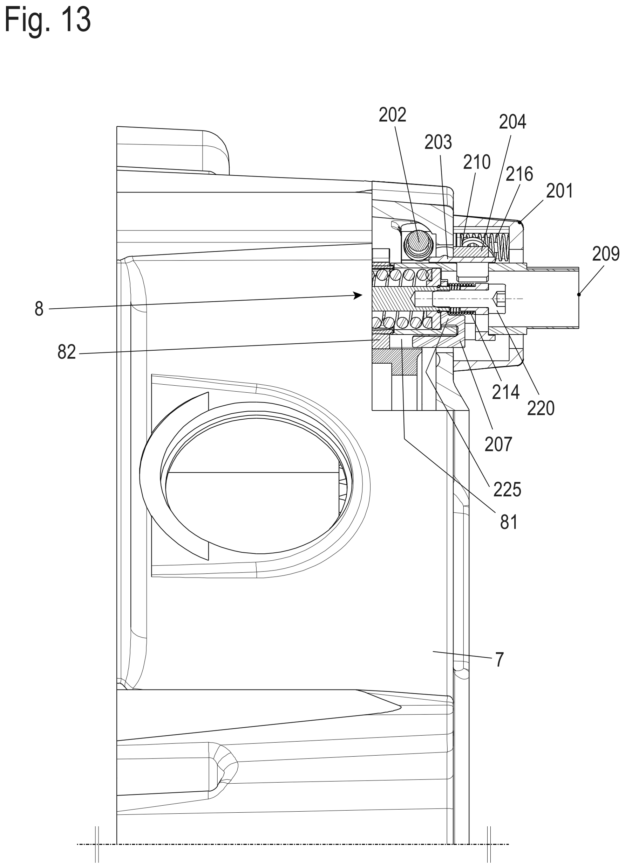

Anhand der **Figuren 12 bis 21** wird im Folgenden eine alternative Ausführungsvariante einer Korrektureinrichtung 200 der Trommelbremse 1 beschrieben.

Bei dieser Variante wird ebenfalls ein sich mit zunehmender Temperatur ausdehnender Stift 202 eingesetzt, durch dessen Längsausdehnung eine Anschlaghülse 203, gezeigt in den Figuren 17 bis 19, von einer ein reguläres Lüftspiel zulassenden Axialbewegung des Nachstellers 8 in eine ein zusätzliches Lüftspiel zulassende Axialbewegung des Nachstellers 8 verschiebbar ist.

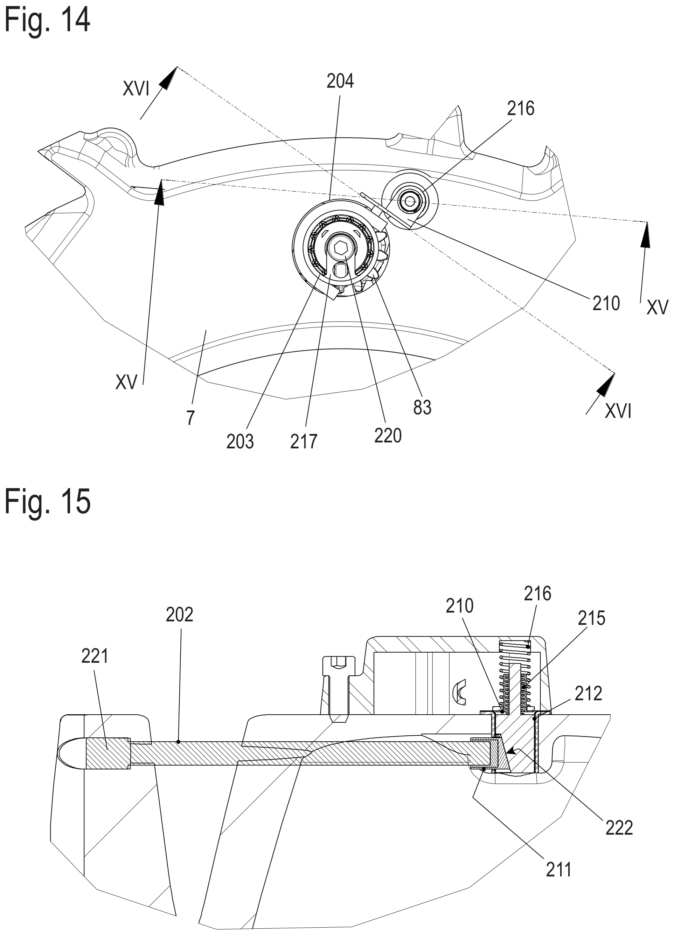

Wie in den Figuren 14 bis 16 gezeigt ist, wirkt der Stift 202 auf einen Keil 212, der die thermische Ausdehnung des Stifts 202 über einen Übersetzungshebel 210 in eine Bewegung einer Schaltgabel 204 übersetzt, die derart mit der Anschlaghülse 203 zusammenwirkt, dass die Schaltgabel 204 bis zu einem vorbestimmten Verschiebeweg die Bewegung der Anschlaghülse 203 nach Erreichen des regulären Lüftspiels sperrt und nach Überschreiten des vorbestimmten Verschiebewegs die Bewegung der Anschlaghülse 203 erst nach Erreichen des zusätzlichen Lüftspiels sperrt.

Der Übersetzungshebel 210 transformiert dabei die lineare Bewegung des Keils 212 derart auf die Schaltgabel 204, dass diese sich radial zur Rotationsachse des Nachstellers 8 bewegt.

Dementsprechend wird bei dieser alternativen Ausführungsvariante der Korrektureinrichtung 200 nicht der Antrieb eines Nachstellzahnrads gesperrt, bis das konstruktive Lüftspiel überschritten ist, sondern ab einer vorbestimmten erhöhten Temperatur der Bremstrommel 2 bzw. des Bremsbackens 5 ein zusätzlicher Weg für die Bewegung des Nachstellers freigegeben, so dass dieser nicht bedingt durch ein vorzeitiges Anschlagen an die Anschlaghülse 203 die Nachstellung der Trommelbremse 1 einleitet.

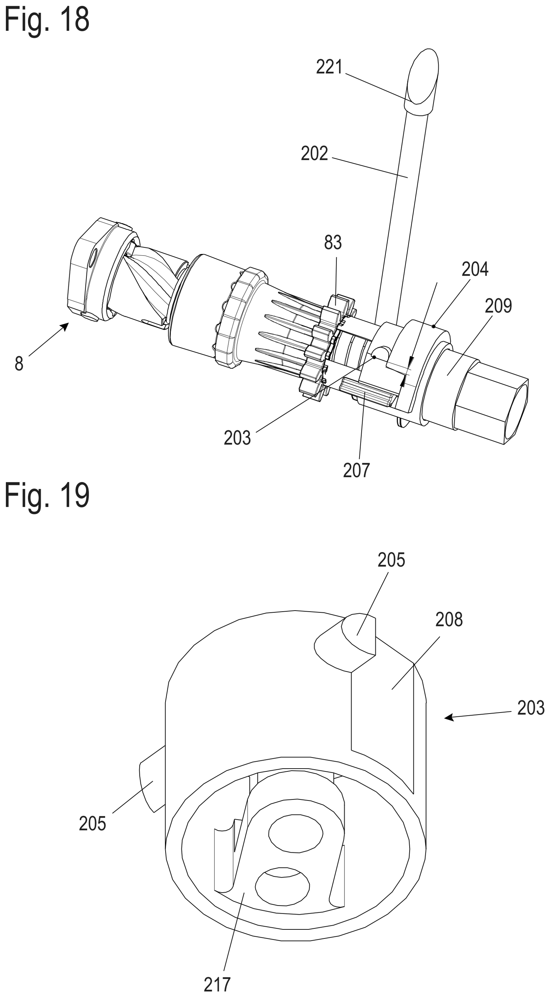

Die hier gezeigte Lösung arbeitet dabei zweistufig, wie es in Figur 18 veranschaulicht ist.

Die erste Stufe bildet dabei das konstruktive Lüftspiel bei niedriger Betriebstemperatur. Hier wird zwischen dem Nachsteller 8 und der Anschlaghülse 203 das konstruktive Lüftspiel mithilfe einer Befestigungsschraube eingestellt. Dabei wird der Nachsteller 8 mit dieser Befestigungsschraube mit der Anschlaghülse 203 auf Block gefahren und dann mit der Befestigungsschraube wieder durch eine definierte Winkelzahl gelöst und so das gewünschte konstruktive Lüftspiel eingestellt.

Eine Druckfeder 214, gezeigt in Figur 12, drückt den Nachsteller 8 in nicht betätigtem Zustand von der Anschlaghülse 203 weg, so dass bei Betätigung der Trommelbremse 1 stets das konstruktive Lüftspiel für die Bewegung des Nachstellers 8 vorhanden ist.

Die zweite Stufe für hohe Betriebstemperaturen wird dabei mithilfe des Stiftes 202 gesteuert. Der Stift 202 ist auch hier bevorzugt ein Stift mit hoher Temperaturleitfähigkeit, beispielsweise Kupfer, der möglichst nahe an einer Stelle befestigt wird, an der die hohe Temperatur der Bremstrommel 2 vorherrscht.

Da die Bremstrommel 2 selbst rotiert, kann der Stift 202 nicht an dieser befestigt werden. Daher wird bevorzugt eine Kontaktstelle zwischen Bremsbacke 5 und Gehäuse als Befestigung für den Stift 202 gewählt. Der Stift 202 weist, wie beispielsweise in Figur 15 dargestellt ist, einen Gewindekopf 221 auf, der ortsfest in einen Steg des Bremstrommelgehäuses, das der Abstützung der Bremsbacke 5 dient, eingeschraubt wird.

Damit ist eine zuverlässige Temperaturübertragung auf den Stift 202 ermöglicht.

Das andere Ende des Stiftes 202 ist als Keilfläche 222 ausgeführt, der an einem Keil 212 anliegt, um so die Längenausdehnung des Stiftes 202 in eine dazu winklig ausgerichtete Bewegung des Keils 212 zu übersetzen.

Um die hohe Temperatur des Stiftes 202 möglichst nicht in die Mechanik des Nachstellmechanismus einzuleiten, ist das keilförmige Ende des Stiftes 202 bevorzugt mit einer Isolierhülse 211 umhüllt.

Der Keil 212 ist mit einem Übersetzungshebel 210 gekoppelt, der die Verschiebebewegung auf eine Schaltgabel 204 überträgt.

Da im Falle einer Betätigung der Trommelbremse 1 der Mechanismus durch die Klemmkraft des Nachstellers 8 gesperrt ist, wird die thermische Ausdehnung des Stiftes 202 in ein System aus zwei mit einer Führungshülse 213 gekoppelte Druckfedern 215, 216 übertragen.

Die Druckfeder 215 ist dabei deutlich stärker ausgeführt als die Druckfeder 216, da die Druckfeder 215 dazu dient, die Verschiebebewegung des Keils 212 zu kompensieren, wenn der Mechanismus über den Kraftschluss aus Nachsteller 8 zu Anschlaghülse 203 zu Schaltgabel 204 zu Übersetzungshebel 210 zur Führungshülse 213 blockiert ist, so dass die Führungshülse 213 ortsfest an ihrem Platz bleibt.

Wird diese Blockade aufgehoben, schiebt die stärkere Druckfeder 215 den Mechanismus in die Druckfeder 216, die ihrerseits dazu dient, bei Abkühlen des Stiftes 202 das System in die Ausgangslage zurückzubewegen.

Der Übersetzungshebel 210 verfährt dabei axial zum Keil 212 und hebt über die mit der Schaltgabel 204 gekoppelte schräge Lauffläche die Schaltgabel 204 an.

Ist diese Schaltgabel 204 weit genug angehoben, radial zur Bewegungsachse des Nachstellers 8, drückt bei Betätigung des Nachstellers 8 die Anschlaghülse 203 in eine Ausnehmung 219 der Schaltgabel 204, so dass die Anschlaghülse 203 auch das zusätzlich freigegebene Lüftspiel überbrücken kann, wobei die Anschlaghülse 203 in diesem Fall durch den Einstellring 206 blockiert wird.

Dieser Einstellring 206 dient zusätzlich dazu, bei der Montage einen Toleranzausgleich vorzunehmen.

Bei der Montage nimmt die Korrektureinrichtung 200 eine Lage ein, die weitgehend durch die Position des Stiftes 202 und die Toleranzkette der angrenzenden Bauteile bis zur Anschlaghülse 203 bestimmt ist.

Der Einstellring 206 muss dabei lediglich so weit eingeschraubt werden, bis er die Schaltgabel 204 leicht berührt. Anschließend kann das Gewinde des Einstellrings 206 beispielsweise durch Einpressen einer Kugel verdrehgesichert werden.

Wie weiter beispielsweise in Figur 17 gezeigt ist, weist die Korrektureinrichtung 200 zusätzlich eine Verdrehsicherung 207 auf.

Die Verdrehsicherung 207 ist zwischen der Druckfeder 214 und dem Nachsteller 8 eingelegt und über die Anschlaghülse 203 gegen Verdrehen gesichert.

Diese Verdrehsicherung 207 weist eine geringere Überdeckung mit dem Getriebe 81 des Nachstellmechanismus auf als das durch den Abstand zwischen Nachsteller 8 und Anschlaghülse 203 eingestellte konstruktive Lüftspiel bei niedriger Temperatur.

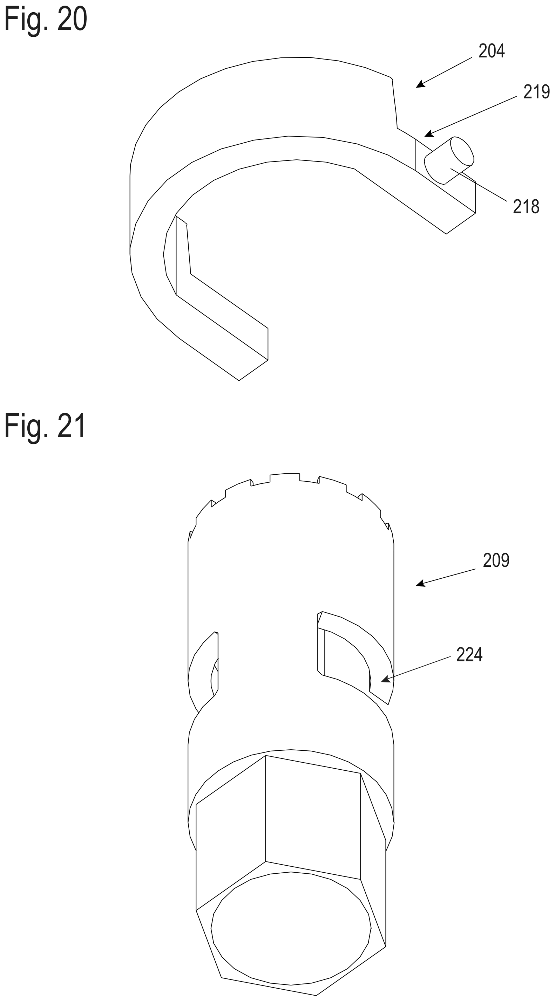

Um den Nachstellweg eines verschlissenen Bremsbackens bei einem Bremsbelagwechsel zurückzudrehen, dient ein Rückstellwerkzeug 209, wie es beispielhaft in Figur 21 gezeigt ist.

Dieses Rückstellwerkzeug 209 verfügt über eine Kulisse 224, die zum einen ein Grenzmoment festlegt, das verhindert, das der Nachsteller 8 bei manuellem Antrieb mittels des Rückstellwerkzeugs 209 überlastet wird und weiter auch verhindert, dass die Verdrehsicherung 207 noch im Eingriff ist, wenn der Nachsteller 8 zurückgedreht wird.

Die Kulisse 224 des Rückstellwerkzeugs 209 passt dabei nur in einer Position auf einen Anschlag 217 der Anschlaghülse 203. Das Rückstellwerkzeug 209 kommt hier nur dann mit dem Nachsteller 8 in Eingriff, wenn dieser über die Befestigungsschraube 220, mit der das konstruktive Lüftspiel eingestellt wurde, in axial zur Drehachse des Nachstellers 8 in Richtung des Anschlags 217 zurückgezogen wurde. Mit dem Zurückziehen des Nachstellers 8 in Richtung des Anschlags 217 erfolgt auch ein axiales Verschieben der Verdrehsicherung 207, so dass eine in Richtung der Drehachse des Nachstellers 8 betrachtete Längserstreckung eines am Nachsteller 8 anliegenden Bügelstücks 225, das nach Zurückziehen des Nachstellers 8 an den Anschlag 217 anliegt, zusammen mit der axialen Dicke des Anschlags 217 kleiner ist als die axiale Breite der Kulisse 224 des Rückstellwerkzeugs und so ermöglicht, das Rückstellwerkzeugs 209 um die Drehachse des Nachstellers 8 zu drehen.

### Bezugszeichenliste

- 1: Trommelbremse
- 2: Bremstrommel
- 2a: Drehachse
- 3: Nabe

- 4: Bremszylinderanordnung
- 41: Aktuatorkolben
- 42: Gehäuse

- 5: Bremsbacke
- 51: Reibbelagträger
- 52: Reibbelag
- 53: Aufnahmenut

- 6: Keilmechanismus
- 61: Keilring
- 62: Keilplatte

- 7: Bremsträger

- 8: Verschleißnachsteller
- 81: Getriebe
- 82: Zahnrad
- 83: Zahnrad

- 9: Lüftspielverstellmechanismus

- 100: Korrektureinrichtung
- 101: Gewindestift
- 102: Druckfeder
- 103: Arretierstück
- 104: Schlitten
- 105: Kolbenführung
- 106: Stützkörper
- 107: Schlauchleitung
- 109: Kolbenführung
- 110: erster Kolben
- 111: Führungsnut
- 112: Gehäuseoberteil
- 113: Teleskopstift
- 114: Stift
- 115: Anschlagbuchse
- 116: Druckfeder
- 117: Verschlussstopfen
- 118: zweiter Kolben
- 119: Rückstellfeder
- 120: Stiftgehäuse
- 121: Kontur
- 123: Kopf
- 124: Keil
- 125: Servicewerkzeug

- 200: Korrektureinrichtung
- 201: Kolbendeckel
- 202: Stift
- 203: Anschlaghülse
- 204: Schaltgabel
- 205: Anschlag
- 206: Einstellring
- 207: Verdrehsicherung
- 208: Ausnehmung
- 209: Rückstellwerkzeug
- 210: Übersetzungshebel
- 211: Isolierhülse
- 212: Keil
- 213: Führungshülse
- 214: Druckfeder
- 215: Druckfeder
- 216: Druckfeder
- 217: Anschlag
- 218: Pin
- 219: Ausnehmung
- 220: Befestigungsschraube
- 221: Kopf
- 222: Keilfläche
- 223: Führungsnut
- 224: Kulisse
- 225: Bügelstück

- N: Normalstellung
- T: Temperaturstellung

## Patentansprüche

1. Trommelbremse (1), insbesondere für ein Nutzfahrzeug, aufweisend
- eine um eine Drehachse (2a) drehbar gelagerte Bremstrommel (2),
- mehrere in einem Aufnahmeraum (22) der Bremstrommel (2) gelagerte Bremsbacken (5) mit einem jeweiligen Reibbelagträger (51) und einem an diesem angeordneten Reibbelag (52),
- einen Nachsteller (8) zur Erfassung und zum Ausgleich eines vergrößerten Lüftspiels,
**gekennzeichnet durch**
- einen Lüftspielverstellmechanismus (9), der eine mit dem Nachsteller (8) gekoppelte temperaturabhängige Korrektureinrichtung (100, 200) zur Anpassung des Lüftspiels entsprechend einer Temperatur der Bremstrommel (2) aufweist.

2. Trommelbremse (1) nach Anspruch 1, **dadurch gekennzeichnet, dass** die Korrektureinrichtung (100, 200) das Lüftspiel aus einer Normalstellung (N) des Lüftspielverstellmechanismus (9) bei normaler Temperatur der Bremstrommel (2) derart bei steigender Temperatur der Bremstrommel (2) korrigiert, dass das Lüftspiel in einer Temperaturstellung (T) des Lüftspielverstellmechanismus (9) vergrößert ist und bei Rückgang der Temperatur der Bremstrommel (2) wieder den Wert in der Normalstellung des Lüftspielverstellmechanismus (9) einnimmt.

3. Trommelbremse (1) nach Anspruch 2, **dadurch gekennzeichnet, dass** die Korrektureinrichtung (100) einen sich mit zunehmender Temperatur ausdehnenden Stift (114) aufweist, mit dessen Längsausdehnung mechanisch ein Arretierstück (103) in einer Blockierstellung haltbar ist, in der das Arretierstück (103) in ein Getriebe (81) des Nachstellers (8) zur Verhinderung einer Nachstellbewegung des Nachstellers (8) eingreift.

4. Trommelbremse (1) nach Anspruch 3, **dadurch gekennzeichnet, dass** der Stift (114) mit einer Rückstellfeder (119) gekoppelt ist.

5. Trommelbremse (1) nach einem der vorhergehenden Ansprüche, **dadurch gekennzeichnet, dass** die Korrektureinrichtung (100) einen Schlitten (104) aufweist, der sich bei Betätigung der Bremsbacken (5) synchron zum getätigten Hub bewegt.

6. Trommelbremse (1) nach Anspruch 5, **dadurch gekennzeichnet, dass** zum Abgriff des Hubs der Bremsbacken (5) ein am Schlitten (104) befestigter Stützkörper (106) sich an einem sich bei Betätigung der Bremsbacken (5) parallel zur Drehachse (2a) der Bremstrommel (2) sich bewegendem Keilring (61) eines Keilmechanismus (6) der Trommelbremse (1) abstützt.

7. Trommelbremse (1) nach einem der vorhergehenden Ansprüche, **dadurch gekennzeichnet, dass** das Arretierstück (103) am Schlitten (104) parallel zur Drehachse (2a) der Bremstrommel (2) gleitend gelagert angebracht ist, wobei das Arretierstück (103) durch die temperaturabhängige Ausdehnung des Stifts (114) relativ zum Schlitten (104) verfahrbar ist.

8. Trommelbremse (1) nach Anspruch 3 oder 4, **dadurch gekennzeichnet, dass** der Stift (114) an einem ersten Ende ortsfest zu einem Bremsträger (7) der Trommelbremse (1) gehalten und an seinem freien Ende mit einem durch die Längsausdehnung des Stiftes (114) verschiebbaren ersten Kolben (110) gekoppelt ist.

9. Trommelbremse (1) nach einem der vorhergehenden Ansprüche, **dadurch gekennzeichnet, dass** in einer starr mit dem Schlitten (104) verbundenen Kolbenführung (105) ein über eine flexible Schlauchleitung (107) mit dem ersten Kolben (110) verbundener zweiter Kolben (118) geführt ist, wobei der erste Kolben (110) einen größeren Durchmesser hat als der zweite Kolben (118).

10. Trommelbremse (1) nach einem der vorhergehenden Ansprüche, **dadurch gekennzeichnet, dass** das Gehäuse der Kolbenführung (105) des zweiten Kolbens (118) eine Lasche mit einem Gewinde aufweist, dass zu einer Gewindebohrung im Schlitten (104) korrespondiert,

11. Trommelbremse (1) nach einem der vorhergehenden Ansprüche, **dadurch gekennzeichnet, dass** das Verhältnis eines Verfahrwegs Δs des zweiten Kolbens (118) zur Längenänderung Δl des Stifts (114) direkt proportional zum Verhältnis der Durchmesser des zweiten Kolbens (118) zum ersten Kolben (110) zum Quadrat ist und lediglich mit einem Faktor f mit Wert nahe 1 beeinflussbar ist.

12. Trommelbremse (1) nach einem der Ansprüche 1 bis 10, **dadurch gekennzeichnet, dass** der erste Kolben (110) und der zweite Kolben (118) jeweils aus einem Kolbenpaar bestehen, deren Kontaktflächen einen Winkel zu deren Symmetrieachsen aufweisen, für die, falls die Kolben eines Kolbenpaares senkrecht zueinanderstehen, gilt: $\frac{Δ s}{Δ l} = \frac{tan {W}_{\left(18\right)}}{tan {W}_{\left(10\right)}} \times f$

13. Trommelbremse (1) nach einem der vorhergehenden Ansprüche, **dadurch gekennzeichnet, dass** die Schlauchleitung (107) mit einem flüssigen Medium oder spielfrei in Reihe mit Kugeln, oder mit einem inkompressiblen Medium gefüllt ist.

14. Trommelbremse (1) nach einem der Ansprüche 5 bis 13, **dadurch gekennzeichnet, dass** der Schlitten (104) eine mechanisch lösbare Verbindung für ein Montagewerkzeug aufweist, mit dem der Schlitten (104) parallel zur Hubrichtung bewegbar ist.

15. Trommelbremse (1) nach einem der vorhergehenden Ansprüche, **dadurch gekennzeichnet, dass** ein sich mit der Verschleißnachstellung proportional verschiebbarer Stiftkontakt (113) die Temperatur vom Reibbelagträger (51) ableitet und eine einen Verschleiß und/oder Hub anzeigende Kontur (121) aufweist.

16. Trommelbremse (1) nach Anspruch 1 oder 2, **dadurch gekennzeichnet, dass** die Korrektureinrichtung (200) einen sich mit zunehmender Temperatur ausdehnenden Stift (202) aufweist, durch dessen Längsausdehnung eine Anschlaghülse (203) von einer ein reguläres Lüftspiel zulassenden Axialbewegung des Nachstellers (8) in eine ein zusätzliches Lüftspiel zulassende Axialbewegung des Nachstellers (8) verschiebbar ist.

17. Trommelbremse (1) nach Anspruch 1 oder 2, **dadurch gekennzeichnet, dass** der Stift (202) auf einen Keil (212) wirkt, der die thermische Ausdehnung des Stifts (202) über einen Übersetzungshebel (210) in eine Bewegung einer Schaltgabel (204) übersetzt, die derart mit der Anschlaghülse (203) zusammenwirkt, dass die Schaltgabel (204) bis zu einem vorbestimmten Verschiebeweg die Bewegung der Anschlaghülse (203) nach Erreichen des regulären Lüftspiels sperrt und nach Überschreiten des vorbestimmten Verschiebewegs die Bewegung der Anschlaghülse (203) erst nach Erreichen des zusätzlichen Lüftspiels sperrt.

18. Trommelbremse (1) nach Anspruch 17, **dadurch gekennzeichnet, dass** der Übersetzungshebel (210) die lineare Bewegung des Keils (212) derart auf die Schaltgabel (204) transformiert, dass diese sich radial zur Rotationsachse des Nachstellers (8) bewegt.

19. Trommelbremse (1) nach einem der vorhergehenden Ansprüche, **dadurch gekennzeichnet, dass** die Korrektureinrichtung (200) eine Verdrehsicherung (207) aufweist, die zwischen einer Druckfeder (214) und dem Nachsteller (8) eingelegt und über die Anschlaghülse (203) gegen Verdrehen gesichert ist.

20. Trommelbremse (1) nach Anspruch 19, **dadurch gekennzeichnet, dass** die Verdrehsicherung (207) eine geringere Überdeckung mit dem Getriebe (81) des Nachstellmechanismus aufweist als das durch den Abstand zwischen Nachsteller (8) und der Anschlaghülse (203) eingestellte konstruktive Lüftspiel bei niedriger Temperatur.

21. Trommelbremse (1) nach einem der vorhergehenden Ansprüche, **dadurch gekennzeichnet, dass** die Anschlaghülse (203) einen Anschlag (217) aufweist, der die Position eines für eine Wartung notwendigen, in die Anschlaghülse (203) einsetzbaren Rückdrehwerkzeugs (209) bestimmt.

22. Trommelbremse (1) nach Anspruch 19 und 21, **dadurch gekennzeichnet, dass** das Rückdrehwerkzeug (209) eine Kulisse (224) aufweist, deren axiale Breite so bemessen ist, dass ein Bügelstücks (225) der Verdrehsicherung (207, das nach Zurückziehen des Nachstellers (8) an den Anschlag (217) anliegt, zusammen mit der axialen Dicke des Anschlags (217) kleiner ist als die axiale Breite der Kulisse (224) des Rückstellwerkzeugs (209).
